# EUROPEAN PATENT SPECIFICATION

(11) **EP 2 920 394 B1**
(45) Date of publication and mention of the grant of the patent: **27.05.2020**
(21) Application number: 13855151.0
(22) Date of filing: 13.11.2013
(51) Int. Cl.: G02F 1/155, E06B 9/24, E06B 5/00, E06B 3/54

(54) **MULTI-ZONE ELECTROCHROMIC WINDOWS**
MEHRZONIGE ELEKTROCHROME FENSTER
FENÊTRES ÉLECTROCHROMES À ZONES MULTIPLES

(30) Priority: 13.11.2012 US 201261725980 P; 21.12.2012 US 201261740651 P
(43) Date of publication of application: 23.09.2015
(73) Proprietor: View, Inc., Milpitas, CA 95035 (US)
(72) Inventor: SHRIVASTAVA, Dhairya, Los Altos, California 94024 (US); FRIEDMAN, Robin, Sunnyvale, California 94085 (US); ROZBICKI, Robert T., Germantown, Tennessee 38138 (US); MULPURI, Rao, Saratoga, California 95070 (US); KLAWUHN, Erich, Los Altos, California 94024 (US)
(74) Representative: Haseltine Lake Kempner LLP
(86) International application number: PCT/US2013/069913
(87) International publication number: WO 2014/078429

(56) References cited:
- EP-A1- 1 484 634
- WO-A2-03/012541
- WO-A2-2009/158510
- US-A1- 2003 227 663
- US-A1- 2007 002 420
- US-A1- 2011 260 961
- US-B2- 7 450 294
- US-B2- 8 164 818
- DATABASE WPI Week 198640 1986 Thomson Scientific, London, GB; AN 1986-262118 XP002757310, -& JP S61 190815 A (OSAKA TOKUSHU GOKIN KK) 25 August 1986 (1986-08-25)
- DATABASE WPI Week 198638 1986 Thomson Scientific, London, GB; AN 1986-248346 XP002757311, -& JP S61 176012 A (HITACHI CONDENSER KK) 7 August 1986 (1986-08-07)

## Description

### CROSS-REFERENCES TO RELATED APPLICATIONS

This is a non-provisional application of, and claims priority to, U.S. Provisional Patent Application No. 61/725,980 entitled "MULTI-ZONE EC WINDOWS," filed on November 13, 2012, and to U.S. Provisional Patent Application No. 61/740,651 entitled "MULTI-ZONE EC WINDOWS," filed on December 21, 2012.

### FIELD

Embodiments disclosed herein relate generally to electrochromic (EC) windows having multiple tinting zones.

### BACKGROUND

Electrochromism is a phenomenon in which a material exhibits a reversible electrochemically-mediated change in an optical property when placed in a different electronic state, typically by being subjected to a voltage change. The optical property is typically one or more of tint, transmittance, absorbance, and reflectance. For example, one well known electrochromic material is tungsten oxide (WO₃). Tungsten oxide is a cathodically tinting electrochromic material in which a tinting transition, bleached (untinted) to blue, occurs by electrochemical reduction. When electrochemical oxidation takes place, tungsten oxide transitions from blue to a bleached state.

Electrochromic materials may be incorporated into, for example, windows for home, commercial and other uses. The tint, transmittance, absorbance, and/or reflectance of such windows may be changed by inducing a change in the electrochromic material, that is, electrochromic windows are windows that can be darkened and lightened reversibly via application of an electric charge. A small voltage applied to an electrochromic device of the window will cause it to darken; reversing the voltage causes it to lighten. This capability allows control of the amount of light that passes through the windows, and presents an opportunity for electrochromic windows to be used as energy-saving devices.

While electrochromism was discovered in the 1960s, electrochromic devices, and particularly electrochromic windows, still unfortunately suffer various problems and have not begun to realize their full commercial potential despite much recent advancement in electrochromic technology, apparatus, and related methods of making and/or using electrochromic devices.

According to US-A-2003227663 a transparent chromogenic (electrochromic) panel is provided having sections which are independently controllable without incurring the penalty of excessive "dead" (inactive) areas caused by the need to have a frame around each area. Multiple sections in a monolithic device, in which the width of the non-active area is significantly reduced, are achieved by the interruption or deletion of a transparent conductive coating as, for example, by etching. Thus, a transparent conductive layer is split into two segments so that the hue and/or density of coloration produced in the left and right hand portions of the electrochromic assembly may be separately controlled by potentials applied between a first pair of wires at the left and between a second pair of wires at the right. Thus a color difference between left and right hand sections may be obtained with minimum "non-active zone" separation between the EC active elements, a separation dictated by the thickness of the dividing line which separates the segments of the transparent conductive layer while the counter electrode layer and the EC layer may be continuous.

JPS61190815 A describes a method for patterning a transparent conductive film without changing its thickness by locally increasing its resistance via local ion implantation.

According to JPS61176012 A a transparent electrode is layered on a substrate. Some parts of the electrode which form a necessary pattern is oxidised to make them high resistivity. The oxidation is made by heating in O₂. In further detail on a transparent substrate of plastic or glass, etc., metal oxide of In₂O₃, SnO2, TiO₂, ZnO etc is formed by CVD, ion plating etc.

Some parts of the metal oxide layer are oxidized by laser heating in O₂. The heated parts are changed into high resistivity regions.

### SUMMARY

Thin-film devices, for example, electrochromic devices for windows, and methods of manufacturing are described. Embodiments include electrochromic window lites having two or more tinting (or coloration) zones, where there is only a single monolithic electrochromic device on the lite. The tinting zones are defined by a resistive zone between adjacent tinting zones. The advantages include no visible scribe lines in the viewable area of the EC window due to cutting through the EC device to make separate devices that serve as tinting zones.

The present invention is directed to an electrochromic window lite comprising a monolithic EC device disposed on a transparent substrate. The monolithic EC device is comprised of first and second transparent conductor layers and an EC stack between the first and second transparent conductor layers. A resistive zone is in one or both of the first and second transparent conducting layers. The resistive zone has a higher electrical resistance than a portion of the one of the first and second transparent conducting layers outside the resistive zone. The resistive zone defines two or more tinting zones in the monolithic EC device. One or both of the first and second transparent conducting layers is thinner, but not cut through, along the resistive zone than the rest of the first and second transparent conducting layers. In one case, the resistive zone is a linear region in the one of the first and second transparent conducting layer with thinner material.
Also described is an electrochromic window lite including a monolithic EC device on a transparent substrate, the monolithic EC device including two or more tinting zones, each of said two or more tinting zones configured for operation independent of the others and each having its own associated bus bars, where the two or more tinting zones are not separated from each other by isolation scribes. That is, the EC device stack is not cut through, but rather is intact as a monolithic device. For example, there may be two tinting zones on the lite and the associated bus bars arranged are located at opposing edges of the lite (e.g., vertically oriented), wherein a set of bus bars is associated with each of the two tinting zones.

Bus bars may be configured to enhance coloring of tinting zones. In certain embodiments, bus bars have varying width along their length; the varying width of the bus bars may enhance the tinting front and/or promote selective tinting in a particular tinting zone via voltage gradients. In other embodiments, bus bars may be composites, having both high electrically conductive regions and resistive regions, configured to enhance tinting fronts and/or promote selective tinting in a particular tinting zone via voltage gradients. One embodiment is directed to an electrochromic window lite comprising a monolithic EC device on a transparent substrate and at least one pair of lengthwise variable bus bars configured to produce a tint gradient zone on the monolithic EC device when energized.

According to the invention, the two or more tinting zones are separated by a resistive zone which inhibits, at least partially, the flow of electrons, ions or both across the resistive zone. Resistive zones may, e.g., be parallel to bus bars and/or orthogonal to bus bars. Resistive zones are formed at least by thinning, but not cutting through, one or both transparent conductor layers (TCOs) of the EC device. Monolithic EC lites having two or more tinting zones may be integrated into insulating glass units (IGUs). The mate lite may or may not also be an electrochromic lite, and may or may not also have tinting zones.

These and other features and advantages will be described in further detail below, with reference to the associated drawings.

### BRIEF DESCRIPTION OF THE DRAWINGS

The following detailed description can be more fully understood when considered in conjunction with the drawings in which:
Figure 1 depicts fabrication of an IGU with an EC lite and associated tinting schemes.
Figures 2A and 2B depict an IGU having an EC lite with two tinting zones delineated by laser scribe, and associated tinting schemes, respectively.
Figures 3A and 3B depict fabrication of an IGU with an EC lite having tinting zones configured on a monolithic EC device and associated tinting schemes, respectively.
Figure 3C depicts various tinting schemes as a function of tinting front of tinting zones.
Figures 3D and 3E depict fabrication of an IGU having two EC lites, where each of the EC lites has two tinting zones, and associated tinting schemes, respectively.
Figures 4A-C depict fabrication of an IGU with an EC lite and associated tinting schemes, respectively.
Figures 4D-F depict EC lites, each having a gradient tinting zone.
Figures 5A and 5B depict fabrication of an IGU with an EC lite and associated tinting schemes, respectively.
Figure 5C depicts a perspective and a cross section of an EC device having two tinting zones separated by a resistive zone.
Figure 5D depicts a perspective and a cross section of an EC device having two tinting zones by virtue of a resistive zone.
Figure 5E shows graphs of V_{TCL} for two transparent conducting oxide layers of an EC device configured with a resistive zone created by inhibiting the electrical conductivity of only one of the transparent conducting oxide layers.
Figure 5F depicts a tinting pattern of the EC lite described in relation to Figure 5C.
Figures 5G and 5H depict EC devices, which are not in accordance with the present invention, and which are configured with a resistive zone created by inhibiting the electrical conductivity of only one of the transparent conducting oxides.
Figure 6A depicts a resistive zone establishing a closed perimeter defining a separate tinting zone.
Figure 6B depicts a resistive zone establishing an open perimeter defining a separate tinting zone.

### DETAILED DESCRIPTION

Described herein are optical devices, that is, thin-film devices having at least one transparent conductor layer. In the simplest form, an optical device includes a substrate and one or more material layers sandwiched between two conductor layers, one of which is transparent. An optical device may include a transparent substrate and two transparent conductor layers. Certain embodiments described herein, although not limited as such, work particularly well with solid state and inorganic electrochromic devices.

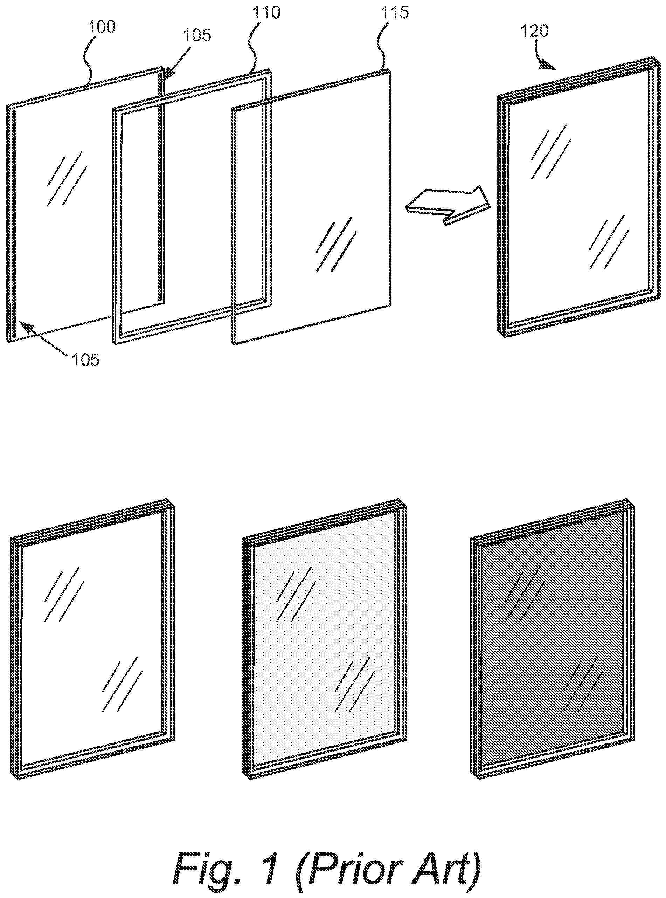

Figure 1 depicts fabrication of an IGU, 120, with an EC lite, 100, which includes a monolithic EC device and associated pair of bus bars, 105, which energize the device each via a transparent conductor, the pair of transparent conductors sandwich the EC materials between them so that a potential can be applied across the device materials. The IGU is fabricated by combining EC lite 100 with a spacer, 110, and a mate lite, 115, along with the appropriate sealants and wiring (not shown) to the bus bars. As depicted on the bottom half of Figure 1, the IGU can be transparent (left), tinted to an intermediate state (middle) or fully tinted (right). However, there is no possibility of tinting the viewable area of the lite in different areas or "zones." Conventional technology does exist to achieve this end, however.

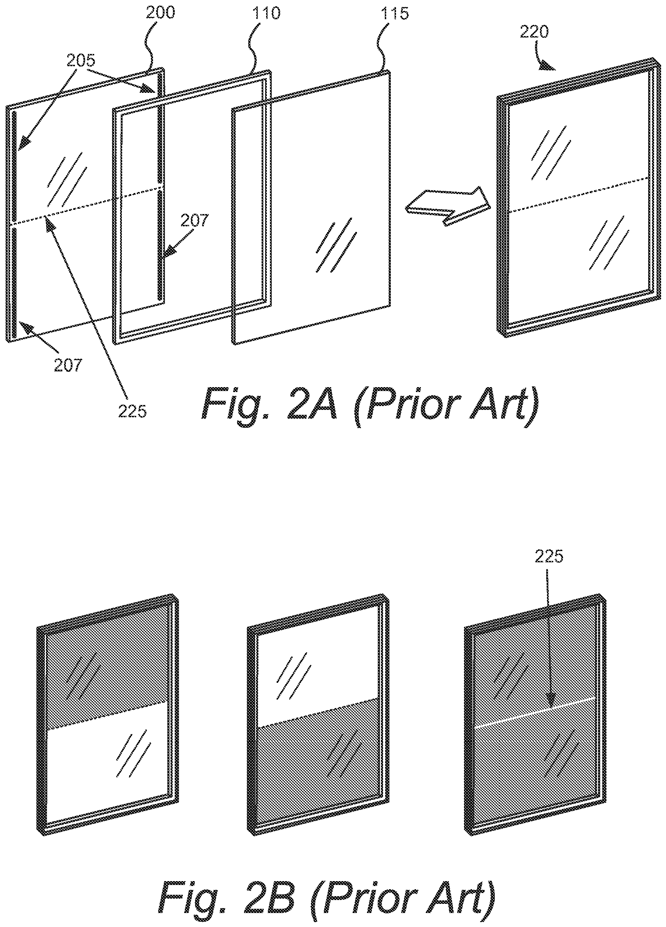

Figure 2A depicts an IGU, 220, having an EC lite, 200, with two tinting zones delineated by laser scribe, 225. Each tinting zone has an associated pair of bus bars, 205 and 207, respectively. The EC lite 200 may be incorporated into an IGU, 220, as described in relation to Figure 1. Scribe line 225 cuts through both of the transparent conductor layers which sandwich the electrochromic materials, along with the EC device layer(s), so that there effectively two EC devices, one corresponding to each tinting zone, on the EC lite 200. Scribe line 225 may not be visually discernible when the EC lite is not tinted, as depicted in Figure 2A, i.e. in the untinted state (bleached or neutral state).

Figure 2B depicts three possible tinting schemes of IGU 220. As shown, IGU 220 may have the top zone tinted and the bottom zone untinted (left), the top zone untinted and the bottom zone tinted (middle) or both the top and bottom zones tinted (right). Although such windows offer flexibility in tinting, when both zones are tinted, scribe line 225 is visually discernible and is unattractive to an end user because there is a bright line across the middle of the viewable area of the window. This is because the EC material in the area has been destroyed and/or deactivated from the scribe line that cut through the device. The bright line can be quite distracting; either when one is looking at the window itself, or as in most cases, when the end user is trying to view things through the window. The bright line against a tinted background catches one's eye immediately. Many approaches have been taken to create tinting zones in optical devices, but they all involve some sort of physical segmentation of a monolithic optical device into two or more individually operable devices. That is, the functionality of the EC device is destroyed along the scribe line, thus effectively creating two devices from a monolithic single device. Certain embodiments described herein avoid destroying the EC device function between adjacent tinting zones.

One approach to overcoming the visually distracting bright line created by a laser scribe in the viewable area of an EC lite is to apply a tinted material to the lite, e.g. on the scribe line or on an opposing side of the lite, in order to obscure or minimize the light passing through the scribe area. Thus, when tinting zones adjoining the scribe are tinted, the scribe line will be less discernible to the end user. When neither of the adjoining tinting zones is tinted, the tinted material in the scribe line area will be almost or completely indiscernible because it is a thin tinted line against a large untinted background, which is harder to see than a bright line against a tinted background. The thin tinted line need not be opaque, a limited amount of absorption of the visible spectrum can be used, e.g., absorption that will tone down the bright line created when the full spectrum emanates through scribe line 225. Methods for obscuring pinhole defects in optical devices, as, for example, described in U.S. Provisional Patent Application Serial number 61/610,241, filed March 13, 2012, and described in PCT Application Serial No. PCT/US2013/031098 filed on March 13, 2013, published as WO 2013/138535 A1, and include methods of obscuring bright areas on EC devices, e.g. by applying tinted material to such areas to make them harder to see to the end user. The methods described in the aforementioned patent application are particularly useful for obscuring scribe lines in the visible area of an optical device such as an EC device. One example is a method of obscuring a scribe line in the viewable area of an EC window, the method including applying a method used to obscure pinholes as described in the aforementioned U.S. Patent application. For example, one method includes applying a tinted material to the scribe line and optionally the area adjacent the scribe line. In another example, the glass at the bottom of the scribe line trench (and optionally some adjoining area) is altered so as to diffuse light that passes therethrough, thus ameliorating the "bright line" effect.

### Tinting Zones

As discussed above, the embodiments described herein avoid destroying the EC device functionality between adjacent tinting zones. Though scribe lines may be visually obscured by application of tinted materials to the lite as described above, the inventors have found that it may be often preferable to maintain the functional integrity of a monolithic EC device, rather than scribe it into discrete devices and thus conventional tinting zones. The inventors have discovered that tinting zones may be created by: 1) configuring the powering mechanism (e.g. bus bars, wiring thereto and associated powering algorithms) of the optical device appropriately, 2) configuring the EC device such that adjacent tinting zones are separated by a resistive zone, or 3) combination of 1) and 2). For example, number 1) may be achieved by appropriately configuring one or more bus bars such that they can be activated independently of other bus bars on the same monolithic EC device. Thus tinting zones are created without the need to physically separate individual EC devices to create corresponding tinting zones. According to the invention, a resistive zone allows coloration and bleaching of adjacent tinting zones on a single EC device without destroying functionality in the resistive zone itself. A resistive zone can refer to an area of the monolithic EC device, where the function is impaired but not destroyed. Typically, the functionality in the resistive zone is merely slowed relative to the rest of the device. Impairment might also include diminished capacity for ions in one or more of the layers of the EC device. For example, one or more EC device layers may be made denser and therefore be able to hold fewer ions, and therefore color less intensely than the bulk device, but still function. A resistive zone may be achieved in at least one of the following ways: i) the electrical resistivity of one or both of the transparent conductor layers is impaired, ii) one or both of the transparent conductor layers is cut, without cutting through the optical device stack therebetween, iii) the function of the optical device stack (not including the transparent conductor layers) is impaired, and iv) combinations of i)-iv). In accordance with the present invention, a resistive zone is created where one or both of the transparent conductor layers is fabricated thinner, but not cut through, e.g. along a linear region, so as to increase electrical resistivity along the linear region of the resistive zone. In another example, one of the transparent conductor layers may be cut along the width of the device, while the other transparent conductor is left intact, but thinner, along the resistive zone. In yet another example, the function of the EC device may be inhibited along a line, so that it resists ion transport, and at least one of the transparent conductor layers is thinner, but not cut through, along the same line. Resistive zones are described in more detail below in terms of specific, but non-limiting examples. If the resistive zone is in one of the transparent layers, the other transparent layer may be left intact (e.g., uniform composition and thickness).

### Configuring Powering Mechanism of EC Devices

Described herein is an electrochromic window lite including a monolithic EC device on a transparent substrate, the monolithic EC device including two or more tinting zones, each of the two or more tinting zones configured for operation independent of the others and having its own associated bus bar or bus bars. The two or more tinting zones are not separated from each other by isolation scribes; that is, the EC device and associated transparent conductors do not have isolation scribes that cut through any of these layers. For example, there may be two tinting zones on the EC lite and two pairs of bus bars, wherein each pair is associated with a tinting zone and both pairs are located at or near opposing edges of the EC lite e.g., the bus bars may be vertically oriented at or near opposing vertical edges with a set of bus bars for each of the two tinting zones. Such lites may be integrated into insulating glass units (IGUs).

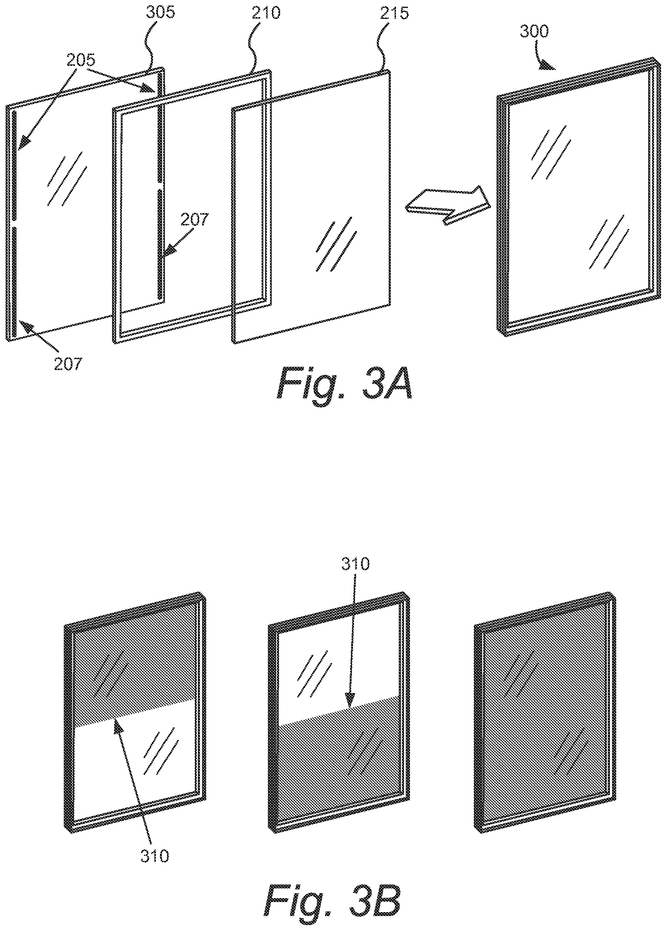

Figure 3A depicts fabrication of an IGU, 300, with an EC lite, 305 having two tinting zones (upper and lower tinting zones) configured on a monolithic EC device, i.e., there are no laser scribes or other physical sectioning (e.g. bifurcation) of the monolithic EC device or transparent conductor layers on the lite. Each of bus bar pairs, 205 and 207, is configured to energize independently of each other. Thus, referring to Figure 3B, IGU 300 has three tinting schemes besides the untinted state (bleached or neutral state) depicted in Figure 3A. Figure 3B shows these three tinting schemes where the top zone may be tinted while the bottom zone is not (left), the bottom zone may be tinted while the top zone is not (middle), or both zones may be tinted (right). In contrast to an EC lite having two distinct EC devices divided at a scribe line, each tinting zone of lite 305, when tinted, has a "tinting front" 310. A tinting front can refer to an area of the EC device where the potential applied across the devices TCOs by the bus bars reaches a level that is insufficient to tint the device (e.g. by movement of ions through the layers of the device to balance charge). Thus, in the example depicted, the tinting front 310 corresponds roughly to where the charge is bleeding off into the area of the transparent conductor that is between the pair of bus bars that are not energized.

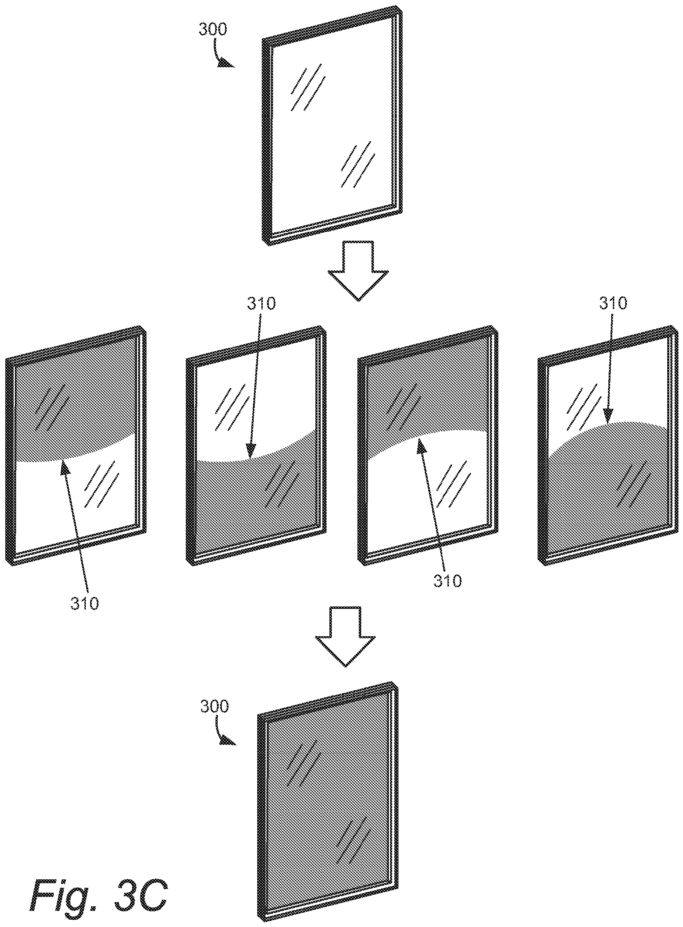

The shape of a tinting front may depend upon the charging characteristics of the transparent conductors, the configuration of the bus bars, wiring and powering thereto, and the like. The tinting front may be linear, curved (convex, concave, etc.), zigzag, irregular, etc. For example, Figure 3B depicts the tinting front 310 as a linear phenomenon; that is, the tinting front 310 is depicted as located along a straight line. As another example, Figure 3C depicts various tinting schemes as a function of tinting front of each of the tinting zones, in this case lower and upper tinting zones. In the illustrated example, the tinting front is curved (e.g., concave or convex) along the tinting front. It may be desirable that when both tinting zones are tinted, the tinting of the EC lite is total and uniform. Thus a convex tinting front may be desirable, so a complimentary concave tinting front may be used in an adjacent zone, or another convex tinting front may be used to ensure sufficient charge reaches the entire device for uniform tinting. In certain cases, the tinting front may not be a clean line as depicted in Figures 3B and 3C, but rather have a diffuse appearance along the tinting front due to the charge bleeding off into the adjacent tinting zone which is not powered at the time.

When the EC lite with tinting zones is incorporated into an IGU or a laminate for example, the mate lite may also be an EC lite, having tinting zones or not. Insulated glass unit constructions having two or more (monolithic) EC lites are described in U.S. Patent serial number 8,270,059, which is hereby incorporated by reference in its entirety. Having two EC lites in a single IGU has advantages including the ability to make a near opaque window (e.g. privacy glass), where the percent transmission (%T) of the IGU is <1%. Also, if the EC lites are two-state (tinted or bleached) there may be certain tinting combinations made possible, e.g. a four-tint-state window. If the EC lites are capable of intermediate states, the tinting possibilities may be virtually endless. Described herein is an IGU having a first EC lite having two or more tinting zones and a mate lite that is a monolithic EC lite. The mate lite may also have two or more tinting zones. The tinting zones may or may not be the same in number or aligned with the tinting zones of the first EC lite with which it is registered in the IGU. Exemplary constructs illustrating these descriptions follow.

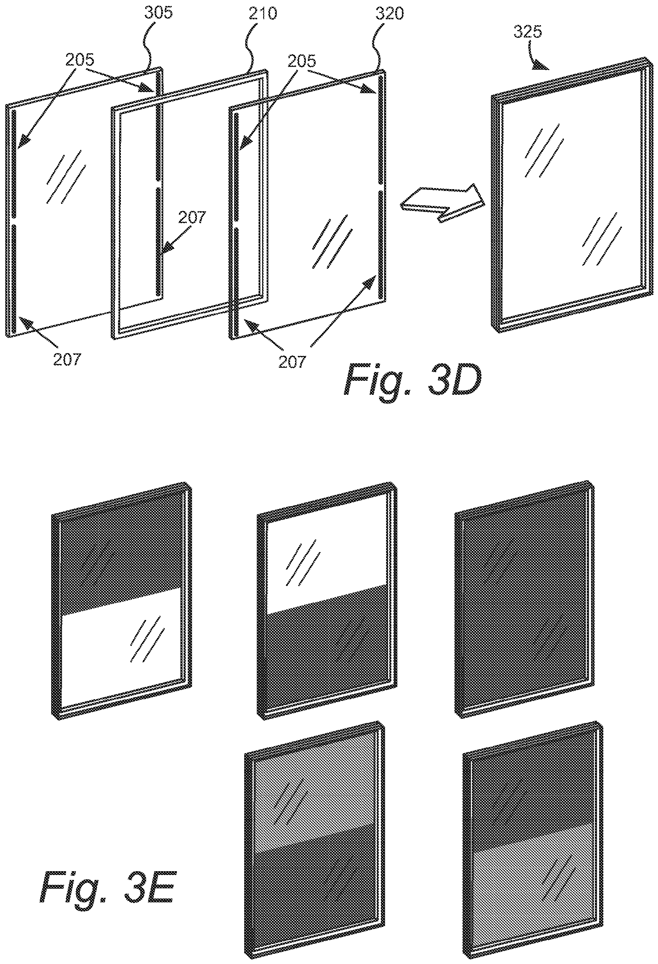

Figure 3D depicts fabrication of an IGU, 325, having two EC lites, 305 and 320, where each of the EC lites has two tinting zones, each of the tinting zones created by appropriately configured bus bar pairs, 205 and 207 at or near two opposing edges. In this illustrated example, the tinting zones of EC lites 305 and 320 are registered, that is, they are aligned with each other and of the same area, but this need not be the configuration. For example, the tinting fronts from opposing EC lites 305 and 320 could overlap each other when tinted. Figure 3D depicts IGU 325 in an untinted state (bleached or neutral state). Also, each of the tinting zones is capable of only two states, tinted or bleached. Even so, this enables a wide range of tinting schemes for IGU 325. Besides the untinted state, IGU 325 is capable of eight tint states. Figure 3B depicts three of the possible tint states (i.e. where one EC lite of IGU 325 is tinted in one of the three configurations shown in Figure 3B). Figure 3E depicts the other five possible tint states for IGU 325. If the top tinting zones of both EC lites are tinted simultaneously, and the bottom two zones are not, then the top half of the IGU is very dark, while the bottom is untinted (top left IGU). If both of the top tinting zones are not tinted, and the bottom two zones are tinted, then the bottom half of the IGU is very dark, while the top is untinted (top middle IGU). If all four zones of the EC lites are tinted, then the entire window is very dark (top right IGU). For example, the combined tinting of all tinting zones in two registered EC lites can achieve <1% T. If one of the top zones in the EC lites is tinted and both of the bottom zones are tinted, then the tint state on the bottom left of Figure 3E is created. Likewise, if one of the bottom zones is tinted and both of the top zones are tinted, then the tint state on the bottom right of Figure 3E is created.

Described herein is an IGU having two or more EC lites, wherein at least two of the two or more EC lites includes multiple tinting zones as described herein. Described herein is an IGU having two or more EC lites, wherein a first of the two or more EC lites includes multiple tinting zones created by conventional isolation scribes, and a second of the two or more EC lites includes tinting zones as described herein by techniques other than isolation scribes.

Configurations such as those depicted in Figures 3B and 3E may be particularly useful in applications such as creating day lighting zones vs. occupant (glare) control zones. Day lighting transoms are very common. For example, creating "virtual transoms" with a piece of glass and thus removing the frame and associated glazier labor has a cost benefit as well as better sight lines. Also, having a variety of tint states such as those depicted in Figures 3B and 3E allows for customization of room lighting based on the amount and location of the sun striking individual windows.

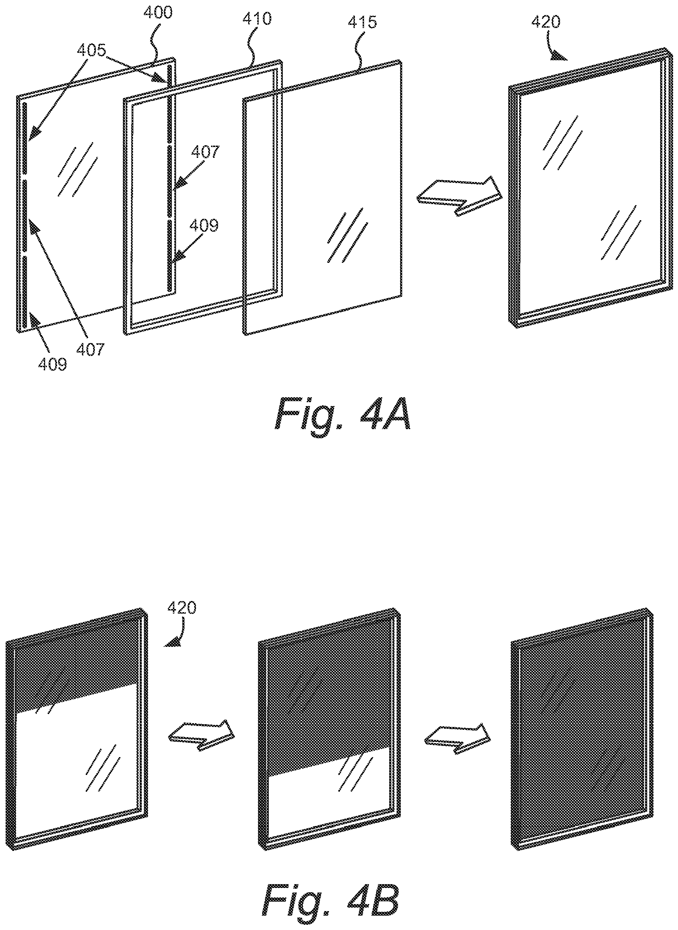

Described herein are methods of transitioning an EC lite having two or more tinting zones. For example, an EC lite having three or more tinting zones is transitioned across the three or more tinted zones from a first zone at one edge of the device, to a second adjacent tinting zone, and then to a third tinting zone, adjacent to the second zone. In other words, the tinting zones are used to give the effect of drawing a physical shade across the window, without actually having a physical shade, since EC windows may eliminate the need for physical shades. Such methods may be implemented with conventional zoned EC lites or those described herein. This is illustrated in Figures 4A-C with respect to an EC lite as described herein.

Referring to Figure 4A, an EC lite, 400, is configured with a first set of bus bars, 405, a second set of bus bars 407, and a third set of bus bars, 409. The three sets of bus bars are configured so as to create three tinting zones, respectively. Although EC lite 400 in Figure 4A is incorporated into an IGU, 420, using a spacer 410 and a mate lite 415, lamination to a mate lite (EC lite or otherwise) or use as a single EC lite is also possible.

Referring to Figure 4B, assuming that each of the tinting zones is tinted as a two-state zone, then the three tinting zones may be activated sequentially, e.g. from top to bottom as depicted, to create a curtain effect, i.e. as if one were lowering a roller shade or drawing a Roman shade over the window. For example, the top zone may be fully tinted, then the second zone may be fully tinted, finally the third zone may be fully tinted. The tinting zones could be sequentially tinted from the bottom up or in the middle and then the upper and lower zones tinted, depending upon the desired effect.

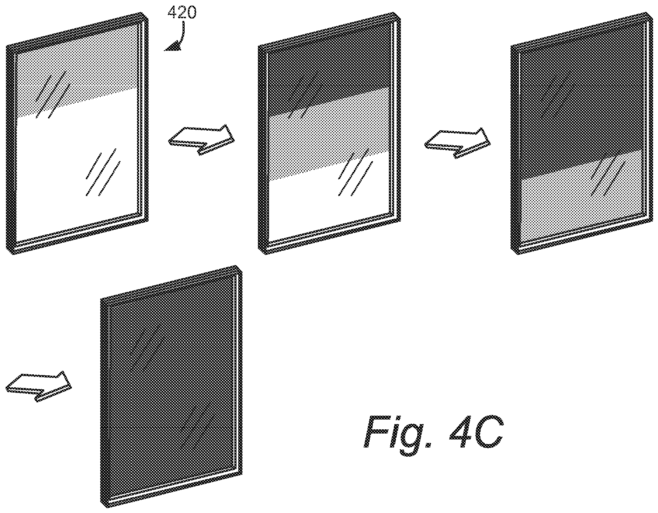

Another method is to tint the tinting zones as described with respect to Figure 4B, except that before transition in a particular tinting zone is complete, transition in an adjacent tinting zone begins, which can also create a curtaining effect. In the illustrated example of Figure 4C, the top tinting zone's tinting is initiated (top left), but before tinting is complete in the top zone, the middle zone's tinting is initiated. Once the top zone's tinting is complete, the middle zone's tinting is not yet complete (top center). At some point during the transition of the middle zone, the bottom zone's tinting is initiated. Once the middle zone's tinting is complete, the bottom zone's tinting is not yet complete (top right), thus the top and middle zones are fully tinted and the bottom zone's tinting is yet to be completed. Finally, the bottom zone is fully tinted. Using tinting zones with intermediate state capability will increase the possible variations of tinting schemes.

### Lengthwise variable busbars

An EC lite may be configured to have one or more tint gradient zones. For example, the EC lite may have an EC device, such as, e.g., a monolithic EC device on a transparent substrate, and also has at least one pair of bus bars with geometry and/or material composition that varies along their lengths to vary electrical resistance lengthwise (lengthwise variable busbars). This variation in resistance can produce a lengthwise gradient in the voltage applied to the EC device supplied across bus bars (*Vₐₚₚ*) and a lengthwise gradient in the local effective voltage (*V_{eff}*) in the EC device. The term *V_{eff}* refers to the potential between the positive and negative transparent conducting layers at any particular location on the EC device. The lengthwise gradient of the *V_{eff}* may generate a corresponding tint gradient zone that varies lengthwise in a region between the pair of bus bars when energized. As such, the lengthwise variable bus bars will have resistance profiles along their lengths that are functions of both the local bus bar geometry and resistivity. The bus bars may be designed so that the resistance is lowest at one end of the bus bar and highest at the other end of the bus bar. Other designs are possible, such as designs where the resistance is lowest in the middle of a bus bar and highest at the ends of the bus bar. A description of voltage profiles in various EC devices powered by bus bars can be found in U.S. Patent Application Serial No. 13/682,618, titled "DRIVING THIN FILM SWITCHABLE OPTICAL DEVICES," filed on November 20, 2012, published as US 2013/0271815 A1.

The local material composition of a bus bar may determine its local resistivity. It is contemplated that the bus bar material composition, and therefore the bus bar resistivity may vary along the length of the bus bar. The resistivity can be tailored based on various compositional adjustments known to those of skill in the art. For example, resistivity can be adjusted by adjusting the concentration of a conductive material in the bus bar composition. Bus bars may be made from a conductive ink such as a silver ink. By varying the concentration of silver in the ink along the length of the bus bar, one can produce a bus bar in which the resistivity likewise varies along the length. The resistivity can also be varied by other compositional adjustments such as the local inclusion of resistive materials in the bus bar or the variation of the composition of a conductive component to adjust its resistivity. Slight variations in composition can change the resistivity of certain conductive materials such as conductive polymers. The electrical conductivity of the bus bar material may be constant, but the thickness and/or width of the bus bar varies along its length.

The value of the voltage that can be applied at any position on the bus bar is a function of the location where the bus bar connects to an external power source and the resistance profile of the bus bar. A bus bar may be connected to the source of electrical power at locations where the bus bar has least resistance, although this is not required. The value of the voltage will be greatest at the locations where the power source connection attaches to the bus bars. The decrease in voltage away from the connection is determined by the distance from the connection and the resistance profile of the bus bars along the path from the connection to the point where voltage is measured. Typically, the value of voltage in a bus bar will be greatest at the location where an electrical connection to the power source attaches and least at the distal point of the bus bar. In some examples, a bus bar will have lower electrical resistance at an end proximal to the connection to the electrical source and a higher resistance at a distal end (i.e. the resistance is higher at the distal end than at the proximal end).

Each of the lengthwise variable bus bars may have linearly, stepped, or otherwise varying geometry and/or material composition along its length. For example, a bus bar with lengthwise-varying geometry may have its width, height, and/or other cross-sectional dimension linearly tapering from the proximal end to the distal end. As another example, a bus bar may be comprised of multiple segments with stepwise decreasing widths or other dimensions from the proximal end to the distal end. In yet another example, a bus bar may have a material composition that varies lengthwise to increase electrical resistivity between proximal and distal ends.

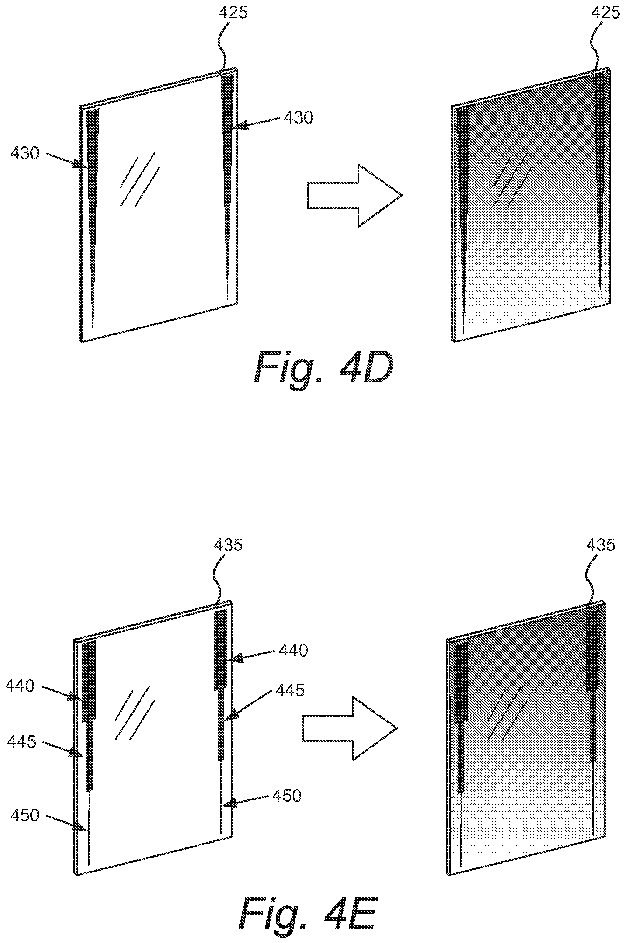

Figures 4D and 4E depict EC lites, 425 and 435 respectively, each having a monolithic EC device on a transparent substrate and a pair of bus bars. The width of each of the bus bars varies along its length. This geometric lengthwise variation in the bus bars may produce a tint gradient zone (gradient in lengthwise direction) on the monolithic EC device when energized.

Figure 4D depicts an EC lite, 425, including bus bars 430. Each of the bus bars 430 has a varying width along its length that linearly tapers lengthwise. The variation in width between the two ends may be between about 10% and about 100% from the average width over the length of the bus bar. The variation in width may be between about 10% and about 80% from the average width over the length of the bus bar. The variation in width may be between about 25% and about 75% from the average width over the length of the bus bar. In this example, not drawn to scale, the bus bars 430 are widest at the top of EC lite 425 and linearly taper lengthwise to their thinnest width near the bottom of lite 425. Because of the varying width, bus bars 430, when energized, establish a voltage gradient. For example, when energized, bus bars 430 have their highest effective voltage at the top, and their lowest voltage at their bottom portion; a voltage gradient is established along the bus bars. As depicted in the right portion of Figure 4D, a corresponding tinting gradient is established by virtue of the voltage gradient. Thus a tint gradient zone is established. Bus bars of varying width can be used in one or more zones of an EC lite having two or more zones as described herein. In this illustrated example, a single tint gradient zone is established across an EC lite. Although a linearly tapered width is illustrated in Figure 4D, a non-linearly tapered width can be used in other cases.

The tapering of the bus bars need not be a smooth taper. For example, a bus bar may have a stepped down width along its length (i.e. stepwise width variation along its length). Figure 4E depicts an EC lite, 435, having a monolithic EC device and bus bars that have stepped widths along their lengths. Each bus bar has three segments with stepped down widths along its length. Each bus bar has a first width that spans a first portion, 440, of the length of the bus bar. Adjacent to the first portion, is a second portion, 445, of the length of each bus bar. The second portion has a second width shorter than the first width. Finally, adjacent to the second portion and having a third width, is a third portion, 450 of each bus bar. The net tinting gradient effect may be the same as or similar to the smooth linearly taper bus bars described in relation to Figure 4D. One of ordinary skill in the art would appreciate that varying the width of the bus bars can be done in other patterns, such as thicker in the middle than at the ends, etc. without escaping the scope of embodiments described herein, that is for an EC lite having bus bars of varying widths configured to create one or more tint gradient zones on a monolithic EC device.

An IGU may include two EC lites, each EC lite having a tint gradient zone as described in relation to Figures 4D and 4E. The tint gradient zone of each EC lite may be configured in opposition to each other, that is, one EC lite has a tinting front that starts at the opposite side (e.g., edge) of where the tinting front of the other EC lite starts. In this embodiment, a unique curtaining effect is established where the tinting fronts approach each other from opposite sides and cross paths in the middle of the IGU. In one case, when transition is complete in both EC lites, the IGU may have a "privacy glass" tint level, of e.g. <1% T. Each EC lite may be tinted independently to provide a "top down" tint gradient or "bottom up" tint gradient. The tint gradient zones of the EC lites may be registered together i.e. aligned so that the tinting fronts of the EC lites start on the same side of the IGU and end at the other opposing side. In this latter example, tinting of the IGU may be done for different tint levels with one lite, e.g., to provide a top down tint gradient of one intensity (absorption gradient e.g.) for one tint level, and another (darker) tint level of tinting gradient when both lites are tinted. Either of the two aforementioned IGU examples may have their individual EC lites tinted together or alternatively tinted asynchronously for yet another shading effect that is not possible with conventional monolithic EC devices.

A bus bar may include an inner portion of electrically conductive material with a cross-sectional dimension (e.g., width) that varies lengthwise, and an outer portion of electrically resistive material. The outer portion may have geometry which is designed to couple and form with the inner portion a uniform cross-section along the length of the bus bar.

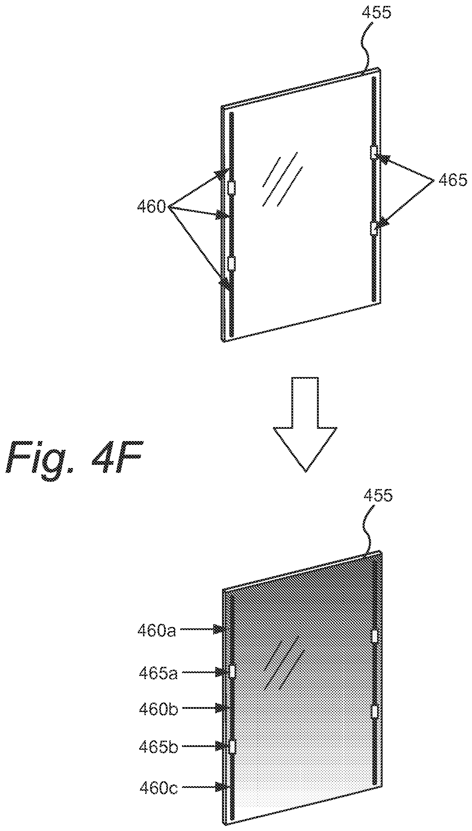

In some examples described above, an electrochromic window lite includes a monolithic EC device on a transparent substrate, wherein the EC lite includes at least one pair of bus bars configured to produce a tint gradient zone on the monolithic EC device when energized. Tinting gradients may be established using bus bars, where each bus bar has at least two portions that are highly conductive. The at least two portions are separated by a portion that is more resistive than the highly conductive at least two portions, while still being electrically conductive. The more resistive portion is configured adjacent to or overlapping the at least two highly conductive portions. As such, the at least two highly conductive portions are separated, they do not touch, but rather each only touches, and is in electrical communication with the more resistive portion in between them. An electrical power source is configured to power only one portion of the at least two highly conductive portions of each of the at least one pair of bus bars. Each of the only one portion of the at least two highly conductive portions is proximate the same side of the monolithic EC device as the other of the only one portion. One of these configurations is described in more detail in relation to Figure 4F.

Tint gradient zones can also be created using bus bars having varying material composition along their lengths. For example, Figure 4F depicts an EC lite, 455, having two bus bars, each configured along opposing edges (e.g., vertically, horizontally, etc.) and parallel to each other on lite 455. In this example, each bus bar has highly electrically conductive portions, 460a, 460b, and 460c (collectively, 460), and less electrically conductive portions, 465a and 465b (collectively, 465). In the illustrated example, less electrically conductive portions, 465a is between highly electrically conductive portions 460a and 460b, and less electrically conductive portions, 465b is between highly electrically conductive portions 460b and 460c. The less electrically conductive portions, 465a and 465b, may be portions of a monolithic bus bar where the conductivity has been reduced by, e.g. changing the morphology of the bus bar material and/or perforating the material, etc. As an example, highly electrically conductive portions 460a, 460b, and 460c may be conventional silver based conductive bus bar ink, while portions 465a and 465b may be a less conductive ink. In this illustrated example, the bus bars may be connected to an electrical source at the top portion, 460a, of each bus bar. A voltage gradient may be established along the length of the bus bars by virtue of the resistive portions 465a and 465b. That is, the top highly conductive portions 460a may have the highest voltage, and the middle highly conductive portions 460b may have a somewhat lower voltage because the more resistive portions 465a lie between them preventing some of the electrical current from flowing to the middle portions 460b from portions 460a. Likewise the bottom-most highly conductive portions 460c may have the lowest voltage because the more resistive portions 465b lie between them and the middle highly conductive portions 460b preventing some of the electrical current from flowing from middle portion 460b to lower portion 460c. The net effect may be a tint gradient zone, for example, the one depicted in Figure 4F. Highly electrically conductive portions 460 may be of the same or different conductive material, and likewise, less electrically conductive portions 465 may be comprised of the same or different conductive material. The key is that portions 465 are less electrically conductive than their adjacent neighbors 460. Using this technology, a wide variety of voltage and/or resistance patterns may be established in order to create corresponding tint gradient zones in an EC lite. In addition, a combination of bus bars of lengthwise varying width and those bus bars configured as described in relation to Figure 4F may be used. For example, each as partners in a bus bar pair and/or in individual tint gradient zones on an EC lite.

An EC lite may be configured to have a combination of tint gradient zones and tint zones that do not have tint gradient capability (non-gradient tint zones). Described is a monolithic EC device having two or more tinting zones, where at least one tinting zone is a tint gradient zone and at least one tinting zone is a non-gradient tint zone. Described is a monolithic EC device having two or more tint gradient zones, with or without also having a non-gradient tint zone.

The bus bars described in relation to Figure 4F are configured such that each highly electrically conductive portion, 460a, 460b, and 460c, has its own electrical connection to a power source. Analogous to the separate bus bar pairs described in relation to Figure 4A (or Figures 3A or 3D), the bus bars described in relation to Figure 4F, when configured with each highly electrically conductive portion 460 having its own power source, may be used to create tint gradient zones with tinting patterns similar to those described in relation to Figures 4B and 4C.

When using powering mechanisms alone to create tinting zones, the tinting front may not be a clean line, but rather have a diffuse appearance along the tinting front due to the charge bleeding off into the EC device's adjacent zone which is not powered at the time. Resistive zones may be used to aid in maintaining more well-defined tinting fronts. Resistive zones are described in more detail below.

### Resistive Zones with or without Configuring Powering Mechanism of EC Devices

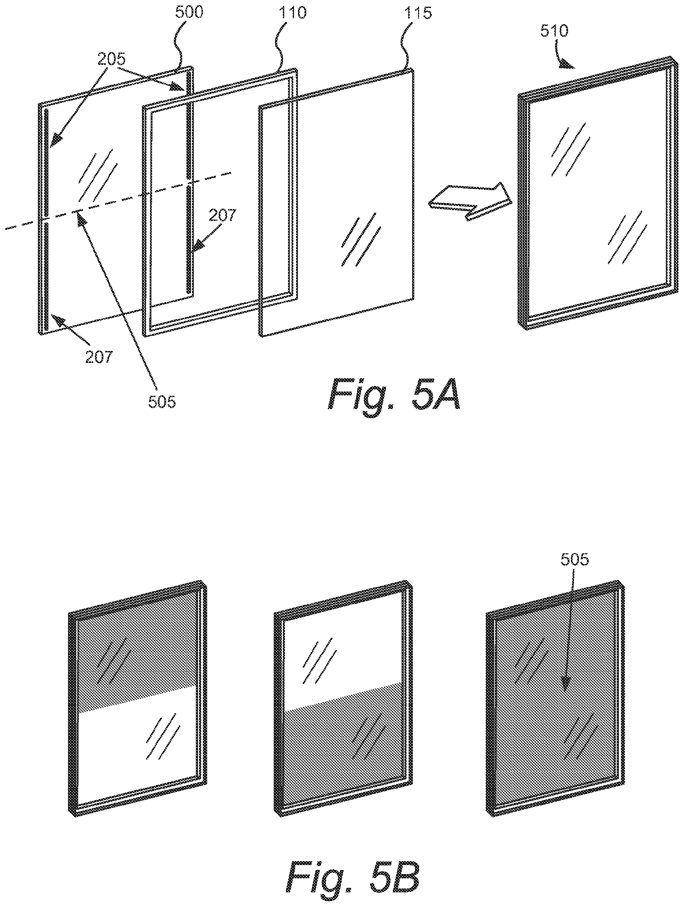

Resistive zones are configured in the monolithic EC device. These resistive zones may allow for more uniform tinting fronts, e.g., when used in combination with bus bar powering mechanisms described herein. Referring to Figure 5A, an EC lite, 500, much like EC lite 200 of Figure 2A, is configured with two pairs of bus bars for creating two tinting zones, in this example (as depicted) a top and a bottom zone. EC lite 500 may be incorporated into an IGU, 510, with a spacer 110 and a mate lite 115 as depicted. A major difference between lite 200 of Figure 2A and lite 500 of Figure 5A is that lite 500 does not have a laser scribe 225 across the lite to bifurcate the EC device into two devices. Lite 500 has a single EC device over the viewable area of the lite. However, the EC device on lite 500 includes a resistive zone, 505, that spans the width of the EC device. The heavy dotted line in Figure 5A indicates the approximate position of resistive zone 505. As depicted in the IGU construct 510, resistive zone 505, like laser scribe 225, may not be visible to the naked eye when the EC lite's zones are not tinted. However, unlike laser scribe 225, when adjacent tinting zones of EC lite are tinted, resistive zone 505 may not be visually discernible to the naked eye. This is illustrated schematically in the right portion of Figure 5B. The reason resistive zone 505 tints is because it is not a physical bifurcation of the EC device into two devices, but rather a physical modification of the single EC device and/or its associated transparent conductors within a resistive zone. The resistive zone is an area of the EC device where the activity of the device, specifically the electrical resistivity and/or resistance to ion movement is greater than for the remainder of the EC device. Thus one or both of the transparent conductors are modified to have increased electrical resistivity in the resistive zone, and/or the EC device stack may be modified so that ion movement is slower in the resistive zone relative to the EC device stack in the adjacent tinting zones. The EC device still functions, tints and bleaches, in this resistive zone, but at a slower rate and/or with less intensity of tint than the remaining portions of the EC device. For example, the resistive zone may tint as fully as the remainder of EC device in the adjacent tinting zones, but the resistive zone tints more slowly than the adjacent tinting zones. In another example, the resistive zone may tint less fully than the adjacent tinting zones, and at a slower rate.

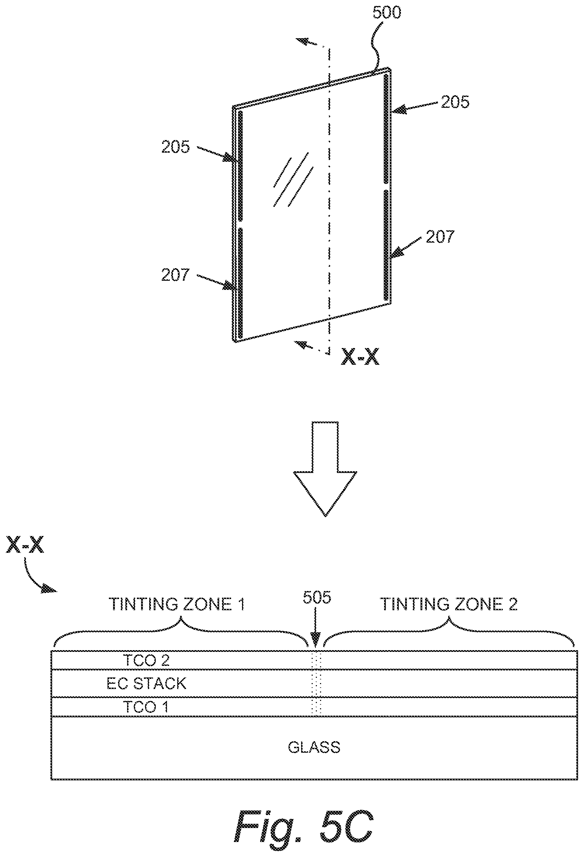

Figure 5C is a perspective and a cross section, **X-X,** of EC lite 500 as described with respect to Figures 5A and 5B. The cross section, **X-X,** spans the upper and lower tinting zones (tinting zones 1 and 2, respectively) of EC lite 500 as well as resistive zone 505. Cross section **X-X** (lower portion of Figure 5C) is not to scale, but rather a schematic representation of the structure of EC lite 500. On the glass substrate is an EC device including a first transparent conducting oxide layer, TCO 1, a second transparent conductive oxide layer, TCO 2, and sandwiched in between the TCOs is an EC stack which contains one or more electrochromic materials, e.g., the transitions of which are driven by intercalation/deintercalation of ions, such as lithium ions. Resistive zone 505 is an area in the EC device where one or more layers of the EC device have their function impaired, either partially or completely, but *device function is not cut off across the zone.* According to the invention, one or both of the TCOs has a higher resistance to electrical flow in resistive zone 505 than in the tinting zones. Thus, e.g., if tinting zone 1 is activated, electrons flow across the TCOs at a given rate, but that flow is restricted along resistive zone 505. This allows the electrons to be sufficiently retained in tinting zone 1 and thus leak more slowly across resistive zone 505 than otherwise would be the case if TCO function had not been impaired there. Resistive zone 505 could be thought of as a "dam" for electrical flow, impairing rate of electrical flow across it, the flow can be partially or fully impaired in one or both TCOs, for example. Due to the restricted or slowed rate of electrical flow across resistive zone 505, ion intercalation in the EC stack between the TCOs at resistive zone 505 is also impaired. Because the EC device is not physically cut into two devices, this is unlike conventional devices having zones created by physical bifurcation of a single device. Resistive zone 505 may also have physical impairment of ion flow in one or more of the EC material layers as well. In one example, both the top and bottom TCO's electrical conductivity is partially impaired, in resistive zone 505, but the function of the EC device stack layers is substantially unchanged. Thus, when one tinting zone is tinted and the adjacent zone is not-tinted, the device will tint under resistive zone 505. When adjacent tinting zones are both tinted, there is no bright line discernible to the end user, because the device tints under resistive zone 505.

Resistive zone 505 may be fabricated, for example, by exposure of the area at the resistive zone 505 to irradiation, e.g. laser or heat source, in order to modify but not destroy the function at resistive zone 505. For example, one or both of the TCO layers may be heated sufficiently to change the morphology while retaining the function, albeit impaired relative to the remainder of the TCO layers in the tinting zones. It may be advantageous to impair the function of only one TCO in a resistive zone. Resistive zones may also be created by impairing the function of one or more layers of the EC device (or one or both TCOs) by chemical doping. For example, the lower TCO may be treated along a line (at resistive zone 505, e.g.) with heat and oxygen to create a more resistive TCO at the resistive zone. In accordance with the present invention, one or both TCOs are fabricated thinner along the resistive zone than the rest of the TCOs, e.g. TCO material may be removed, but not cut through, along the resistive zone.

In certain embodiments, the resistive zones may be narrow, e.g. between about 1 µm and 1000 µm wide, or may be wider, e.g. between about 1 mm and about 10 mm wide. Because the EC materials in resistive zones tint and do not necessarily leave a bright line contrast effect typical of conventional laser isolation scribes, there is less concern as to the width of the described resistive zones. Thus, in other embodiments, a resistive zone may be, for example, wider than 1mm, wider than 10mm, wider than 15 mm, etc.

In the embodiment described in relation to Figures 5A, 5B, and 5C, each of the tinting zones has its own pair of bus bars. Thus tinting zones can be colored independently by virtue of operation or the respective bus bar pairs at each tinting zone. In other embodiments, multiple tinting zones may be configured between a single set of bus bars (e.g., two or more bus bars located on opposing edges).

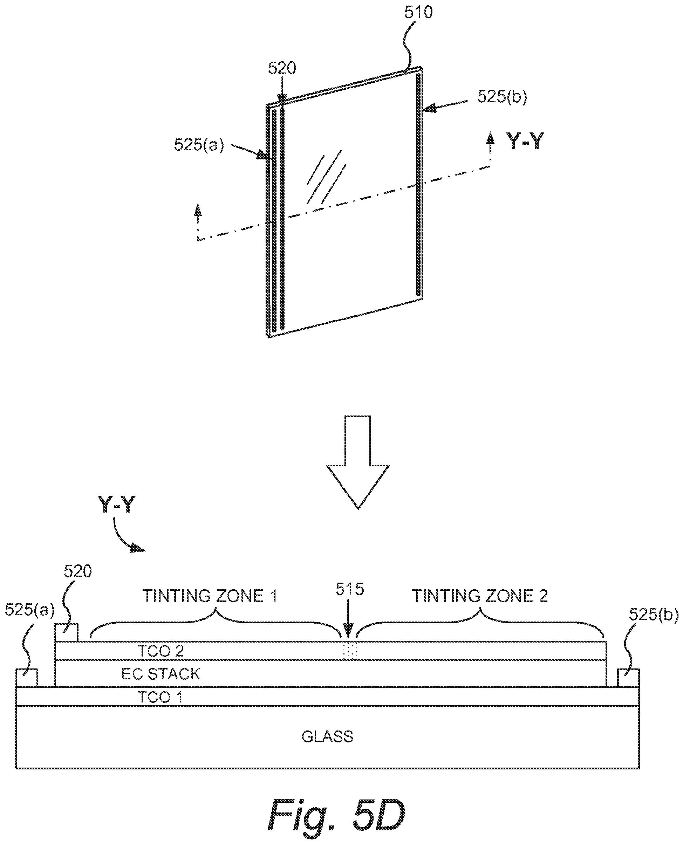

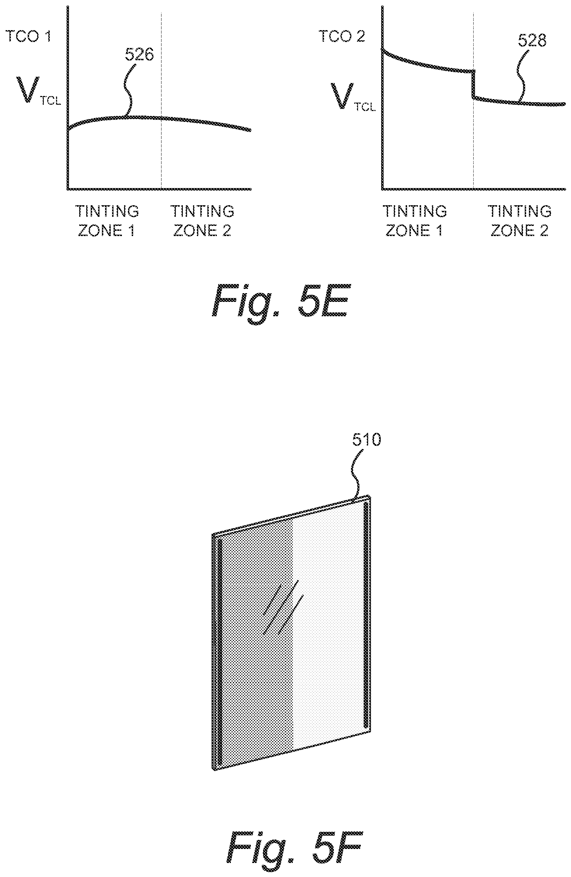

Figure 5D depicts a perspective (top portion) and a cross section **Y-Y** (bottom portion) of an EC lite, 510, having two tinting zones of variable tinting level by virtue of a resistive zone, 515. In this illustrated example, a single set of three bus bars, 525(a), 525(b), and 520, is used with two tinting zones. Cross section, **Y-Y,** of EC lite 510 spans left and right tinting zones (tinting zones 1 and 2, respectively) of lite 510 as well as resistive zone 515. Resistive zone 515 runs parallel to and between (approximately in the middle of EC lite 510) bus bars 520 and 525(a) and bus bar 525(b) (from top to bottom as depicted in the perspective at the top of Figure 5D). Cross section **Y-Y** (lower portion of Figure 5D) is not to scale, but rather is a schematic representation of the structure of EC lite 510. On the glass substrate is an EC device including a first transparent conducting oxide layer, TCO 1, a second transparent conductive oxide layer, TCO 2, and sandwiched in between TCO 1 and TCO 2 is an EC stack which contains one or more electrochromic materials, e.g., the transitions of which are driven by intercalation/de-intercalation of ions, such as lithium ions. In this example, resistive zone 515 is an area of TCO 2, where the TCO function is impaired but not eliminated. For example, TCO 2 may have its function impaired along a line. FIG. 5E includes two graphs showing plots of the local voltage *V_{TCL}* in TCO 1 and TCO 2 of the EC lite, 510, of Figure 5D that drives transition. At the left, a graph shows a curve 526 of the local values of *V_{TCL}* in the TCO 1. At the right, a graph shows a curve 528 of the local values of V_{TCL} in the TCO 2. In this example, when the EC device is energized, the bottom TCO 1 has a local voltage potential *V_{TCL}* across its span similar to that of a typical transparent conductor for an EC device. According to curve 526 of *V_{TCL}* in TCO 1, the voltage increases slightly in the middle away from where bus bars 525(a) and 525(b) are disposed on TCO 1 where voltage is applied due to the sheet resistance and current passing through TCO 1. The increase will be near bus bar 525(a) and bus bar 520 because of the higher current in this area due to higher voltage potential between bus bar 525(a) and bus bar 520. But TCO 2, by virtue of resistive zone 515, has a higher *V_{TCL}* in tinting zone 1 than in tinting zone 2. According to curve 528 *V_{TCL}* in TCO 2, the slight voltage drops between the left hand side where bus bar 520 is disposed on TCO 2 and the resistive zone due to sheet resistance and current passing through TCO 2. At the resistive zone 515, the voltage sharply drops. The voltage slightly drops between the resistive zone 515 and the right hand side due to sheet resistance and current passing through TCO 2. The value of *V_{eff}* at any location between the bus bars is the difference in values of curves 130 and 125 at that position on the x-axis corresponding to the location of interest. The result is that tinting zone 1 has a higher *V_{eff}* than tinting zone 2 and thus tinting zone 1 colors more darkly than tinting zone 2. This is represented in Figure 5F. Of course, the two tinting zones can be configured as upper and lower portions when installed in a building, and they need not be side by side as depicted.

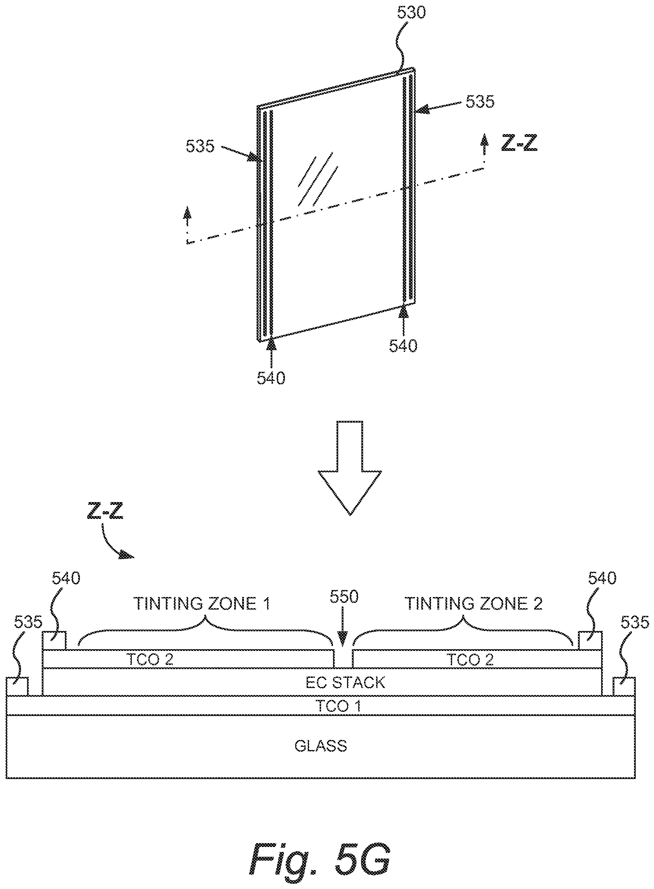

Figure 5G depicts an EC lite, 530, configured with a resistive zone created by inhibiting the electrical conductivity of only one of the transparent conducting oxides. The EC lite is much like the one described in relation to Figure 5E, but one of the TCOs is *cut through* along the resistive zone (cut 550), while the other TCO is left intact. The EC device stack is unchanged in the resistive zone, only the top TCO is cut. The EC lite 530 has two sets of bus bars, 535 and 540. Bus bar set 535 powers the lower TCO 1, while bus bar set 540 powers the top TCO 2. The lower portion of Figure 5G shows cross section **Z-Z.** The EC device will still at least partially color along the resistive zone by virtue of one of the TCOs being fully intact, monolithic, along with the EC stack. While there is a narrow region of the opposite TCO 2 missing, there is sufficient voltage potential established between the intact TCO 1 and the edge of the cut (opposing) TCO 2 along the resistive zone to allow coloration of the EC device in the resistive zone, albeit more slowly than if both TCOs were intact along the resistive zone. The resistive zone may color more lightly when only one of the tinting zones is powered, while with both tinting zones powered, the resistive zone may fully tint or approximate full tinting. Each portion of TCO 2 can be powered independently of TCO 1. In this way, separate zones, tinting zone 1 and tinting zone 2, may, e.g., be tinted more effectively. Since there is a cut through the TCO 2, if only one zone is powered, *V_{TCL}* is only established in that tinting zone. The cut in TCO 2 aids in establishing and maintaining a uniform tinting front. Since the TCOs are a type of moisture barrier, EC lite 530 may be incorporated into an IGU where the EC device is hermetically sealed within the volume of the IGU, and/or a top coat may be used to hermetically seal the device, with our without lamination to a substrate. A top coat would fill the open trench cut through TCO 2.

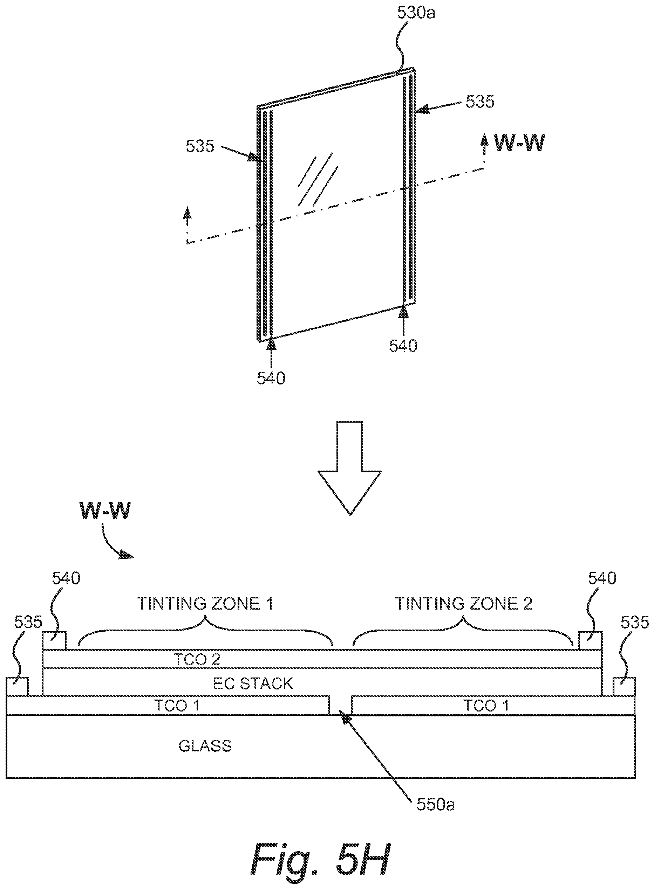

It may be more desirable to cut the bottom TCO 1 rather than the top TCO 2. Figure 5H shows EC lite, 530a, where the cut, 550a, is made only through the bottom TCO 1. The top TCO 2 may maintain its hermeticity by virtue of an intact top transparent conductor layer. The EC material may fill in the trench made by cut 550a, and thus tint along with the trench in TCO 1 that it fills, providing an area of inhibited coloration rate such as a resistive zone.

It may more desirable to cut the top TCO 2 rather than the bottom TCO 1. Figure 5G shows EC lite, 530, where the cut, 550, is made only through the top TCO 2. An advantage of this may be that the cut can be made after the EC device is fabricated, for example, by laser processing performed after sputter coating.

The busbars 535 and 540 depicted in Figures 5G and 5H need not be parallel, e.g. the bus bars powering each TCO can be orthogonal to each other. Also, the single monolithic TCO need not have two bus bars, but it is desirable so as to have more control over tinting of the individual tinting zones. Bleaching function would work the same way but in reverse polarity to bleach the tinting zones.

Resistive zones need not be linear as depicted, but rather may be of any shape. For example, for desired effects, one might choose a resistive zone that is zigzagged, curved or irregularly shaped along adjacent tinting zones.

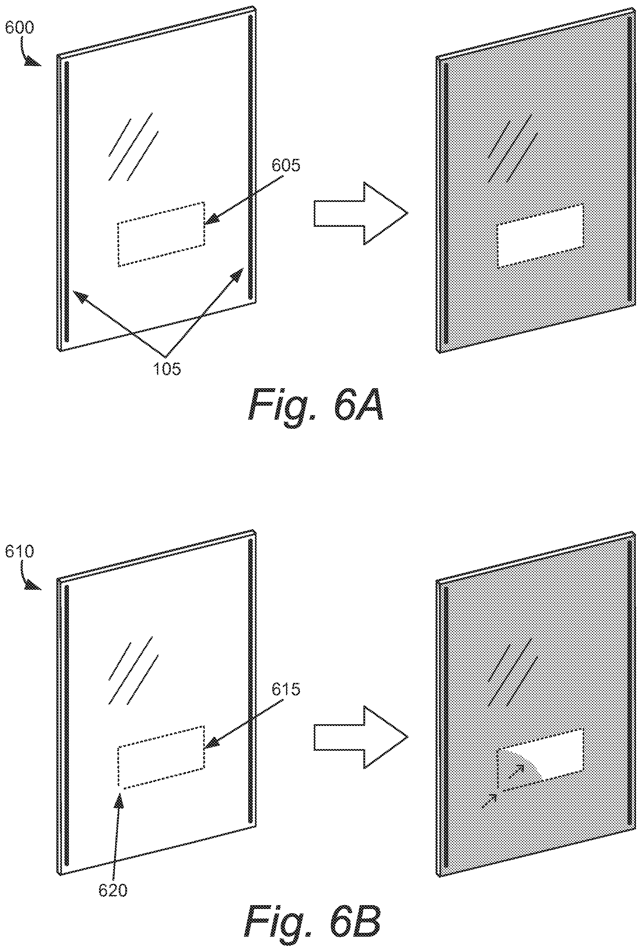

In certain embodiments, resistive zones are used to define a perimeter, closed or open, of a region of an EC window. For example, these resistive zones can be used to highlight particular symbols or shapes in the viewable region of the EC window. One embodiment with such a resistive zone is illustrated in Figures 6A and 6B. For example, an end user may wish to have an area of the EC window that does not tint, or that becomes tinted more slowly, than the remainder of the tintable EC window.

Figure 6A depicts an EC lite, 600, which includes a single pair of bus bars, 105, as well as a resistive zone, 605. In this example, the resistive zone is in the shape of a closed rectangle (as indicated by the dotted line). Resistive zone 605 may not be visually discernible to the naked eye. In one embodiment, resistive zone 605 is configured such that the portions of the TCOs of the EC device in the resistive zone (as indicated by the dotted line) have a higher electrical resistance than the portions of the TCOs in the remainder of the EC device on either side of the resistive zone (in this example both outside and inside the rectangular perimeter zone), but the resistive zone still passes charge. In this embodiment, when the EC device is tinted, the area around the resistive zone 605 tints first, the tinting front slowing when it reaches the rectangular closed resistive zone 605. This momentarily, e.g. for a period of minutes, gives the effect of a small untinted view port in a larger tinted window. As the charge bleeds beyond the resistive zone and into the untinted rectangular region within the zone, this gives the effect of the small untinted view port closing as it tints. In another embodiment, resistive zone 605 is configured such that the portions of the TCOs of the EC device in the resistive zone (as indicated by the dotted line) have a very high resistance to electrical charge as compared to the portions of the TCOs in the remainder of the EC device on either side of the resistive zone (in this example both outside and inside the rectangular perimeter zone), that is, the resistive zone effectively blocks electrical charge. In this embodiment, when the area outside the zone is tinted, the area inside the zone may never tint because the charge may not be able to pass the resistive barrier 605. This gives the effect of a small untinted view port in a larger tinted window, so long as the EC device is tinted. In another embodiment, resistive zone 605 is configured such that the portions of the TCOs of the EC device in the resistive zone (as indicated by the dotted line) and in the region within the resistive zone have a very high resistance to electrical charge as compared to the portions of the TCOs in the remainder of the EC device on the outside of the resistive zone.

Figure 6B shows a similar EC lite, 610, having a resistive zone, 615, which is "open" by virtue of a gap, 620, in the perimeter. In this example, the resistive zone 615 is configured to block electrical charge. When the EC device is tinted, the area around the resistive zone 615 tints first, the tinting front slowing when it reaches the rectangular closed resistive zone 615, except at the open portion 620, where the tinting front gives the effect of "pouring in" or "filling in" (as indicated by the two dotted arrows) the rectangular region within resistive zone 615. Eventually, when the area inside resistive zone 615 is tinted, resistive zone 615 may no longer be discernible to the naked eye, as the EC device colors under the zone, as described above. Configuring resistive zones in such a way can be used to achieve permanent or transient tinting effects on EC windows, e.g., to display a logo or words in a transient manner for presentation during marketing purposes, or to achieve tinted and non-tinting zones on an EC lite. EC lites so configured can be incorporated into IGUs as describe and/or laminated with mate lites.

One of ordinary skill in the art, armed with this disclosure, would appreciate that tint gradient zones can be used with resistive zones and this combination is within the scope of the embodiments described herein.

Although the foregoing embodiments have been described in some detail to facilitate understanding, the described embodiments are to be considered illustrative and not limiting. It will be apparent to one of ordinary skill in the art that certain changes and modifications can be practiced within the scope of the appended claims.

## Claims

1. An electrochromic, EC, window lite comprising:
a monolithic EC device disposed on a transparent substrate, the monolithic EC device comprising first and second transparent conductor layers and an EC stack between the first and second transparent conductor layers; and
a resistive zone in one or both of the first and second transparent conducting layers of the monolithic EC device,
wherein the resistive zone has a higher electrical resistance than a portion of the one or both of the first and second transparent conducting layers outside the resistive zone, whereby the resistive zone defines two or more tinting zones in the monolithic EC device, and **characterized in that**
one or both of the first and second transparent conducting layers is thinner, but not cut through, in the resistive zone than the rest of the first and second transparent conducting layers.

2. The electrochromic window lite of claim 1, wherein the resistive zone is a linear region in the one of the first and second transparent conducting layer with thinner material.

3. The electrochromic window lite of claim 1, wherein the EC stack and other of the first and second transparent conducting layer are uniform.

4. The electrochromic window lite of claim 1, wherein a first tinting zone is to one side of the resistive zone and a second tinting zone is to another side of the resistive zone.

5. The electrochromic window lite of claim 1, wherein the resistive zone substantially spans across the monolithic EC device.

6. The electrochromic window lite of claim 1, wherein the resistive zone is either between about 1 mm wide and about 10 mm wide, or between about 1 µm wide and about 1000 µm wide.

7. The electrochromic window lite of claim 1, wherein the resistive zone defines a perimeter of a separate tinting zone.

8. The electrochromic window lite of claim 7, wherein the perimeter is open.

9. The electrochromic window lite of claim 7, wherein the perimeter is closed.

## Patentansprüche

1. Elektrochrome (EC) Fensterscheibe, umfassend:
eine monolithische EC-Vorrichtung, die auf einem transparenten Substrat angeordnet ist, wobei die monolithische EC-Vorrichtung eine erste und eine zweite transparente Leiterschicht und einen EC-Stapel zwischen der ersten und der zweiten transparenten Leiterschicht umfasst; und
eine Widerstandszone in einer oder beiden der ersten und der zweiten transparenten Leiterschicht der monolithischen EC-Vorrichtung,
wobei die Widerstandszone einen höheren elektrischen Widerstand als ein Abschnitt der einen oder der beiden der ersten und der zweiten transparenten Leiterschicht außerhalb der Widerstandszone aufweist, wodurch die Widerstandszone zwei oder mehr Tönungszonen in der monolithischen EC-Vorrichtung definiert, und **dadurch gekennzeichnet ist, dass**
eine oder beide der ersten und der zweiten transparenten Leiterschicht in der Widerstandszone dünner als der Rest der ersten und der zweiten transparenten Leiterschicht, aber nicht durchgeschnitten ist.

2. Elektrochrome Fensterscheibe nach Anspruch 1, wobei die Widerstandszone ein linearer Bereich in der ersten und der zweiten transparenten Leiterschicht mit dünnerem Material ist.

3. Elektrochrome Fensterscheibe nach Anspruch 1, wobei der EC-Stapel und andere der ersten und der zweiten transparenten Leiterschicht einheitlich sind.

4. Elektrochrome Fensterscheibe nach Anspruch 1, wobei sich eine erste Tönungszone auf einer Seite der Widerstandszone und eine zweite Tönungszone auf einer anderen Seite der Widerstandszone befindet.

5. Elektrochrome Fensterscheibe nach Anspruch 1, wobei sich die Widerstandszone im Wesentlichen über die monolithische EC-Vorrichtung erstreckt.

6. Elektrochrome Fensterscheibe nach Anspruch 1, wobei die Widerstandszone entweder zwischen etwa 1 mm breit und etwa 10 mm breit, oder zwischen etwa 1 µm breit und etwa 1000 µm breit ist.

7. Elektrochrome Fensterscheibe nach Anspruch 1, wobei die Widerstandszone einen Umfang einer separaten Tönungszone definiert.

8. Elektrochromes Fenster nach Anspruch 7, wobei der Umfang offen ist.

9. Elektrochromes Fenster nach Anspruch 7, wobei der Umfang geschlossen ist.

## Revendications

1. Fenêtre électrochrome, EC, vitrée comprenant :
un dispositif EC monolithique disposé sur un substrat transparent, le dispositif EC monolithique comprenant des première et seconde couches conductrices transparentes et un empilement d'EC entre les première et seconde couches conductrices transparentes ; et
une zone résistive dans l'une ou les deux des première et seconde couches conductrices transparentes du dispositif EC monolithique,
dans lequel la zone résistive a une résistance électrique plus élevée qu'une partie de l'une ou des deux des première et seconde couches conductrices transparentes à l'extérieur de la zone résistive, moyennant quoi la zone résistive définit deux zones de teinte ou plus dans le dispositif EC monolithique, et **caractérisée en ce que**
l'une ou les deux des première et seconde couches conductrices transparentes est plus mince, mais sans passer dans la zone résistive par rapport au reste des première et seconde couches conductrices transparentes.

2. Fenêtre électrochrome vitrée selon la revendication 1, dans laquelle la zone résistive est une région linéaire dans l'une parmi la première et seconde couche conductrice transparente dotée d'un matériau plus mince.

3. Fenêtre électrochrome vitrée selon la revendication 1, dans laquelle l'empilement d'EC et autres parmi la première et seconde couche conductrice transparente sont uniformes.

4. Fenêtre électrochrome vitrée selon la revendication 1, dans laquelle une première zone de teinte est d'un côté de la zone résistive et une seconde zone de teinte est d'un autre côté de la zone résistive.

5. Fenêtre électrochrome vitrée selon la revendication 1, dans laquelle la zone résistive s'étend sensiblement à travers le dispositif EC monolithique.

6. Fenêtre électrochrome vitrée selon la revendication 1, dans laquelle la zone résistive est soit comprise entre environ 1 mm de large et environ 10 mm de large, soit entre environ 1 µm de large et environ 1 000 µm de large.

7. Fenêtre électrochrome vitrée selon la revendication 1, dans laquelle la zone résistive définit un périmètre d'une zone de teinte séparée.

8. Fenêtre électrochrome vitrée selon la revendication 7, dans laquelle le périmètre est ouvert.

9. Fenêtre électrochrome vitrée selon la revendication 7, dans laquelle le périmètre est fermé.
